# EUROPÄISCHE PATENTSCHRIFT

(11) **EP 3 708 388 B1**
(45) Veröffentlichungstag und Bekanntmachung des Hinweises auf die Patenterteilung: **05.01.2022**
(21) Anmeldenummer: 20152105.1
(22) Anmeldetag: 16.01.2020
(51) Int. Cl.: B60C 11/11, B60C 11/12, B60C 11/03

(54) **FAHRZEUGLUFTREIFEN**
PNEUMATIC TYRE
PNEUMATIQUE DE VÉHICULE

(30) Priorität: 13.03.2019 DE 102019203406
(43) Veröffentlichungstag der Anmeldung: 16.09.2020
(73) Patentinhaber: Continental Reifen Deutschland GmbH, 30165 Hannover (DE)
(72) Erfinder: Pang-Jian-Xiang, Edwin, 30419 Hannover (DE); Wackerhage, Tanja, 30419 Hannover (DE); Vennebörger, Martin, 30419 Hannover (DE); Schlittenhard, Jan, 30419 Hannover (DE); Bauer, Claudia, 30419 Hannover (DE)
(74) Vertreter: Continental Corporation

(56) Entgegenhaltungen:
- EP-A1- 3 034 331
- DE-A1-102015 224 290
- DE-A1-102016 217 970
- DE-A1-102017 203 221
- DE-A1-102017 211 128

## Beschreibung

### Fahrzeugluftreifen

Die Erfindung betrifft einen Fahrzeugluftreifen mit einem laufrichtungsgebunden profilierten Laufstreifen mit über die Laufstreifenbreite V-förmig zueinander verlaufenden, im Bereich der Laufstreifenmitte ineinander einmündenden Schrägrillen,
wobei in jeder Laufstreifenhälfte zwischen den in Umfangsrichtung aufeinanderfolgenden Schrägrillen jeweils zumindest zwei die aufeinanderfolgenden Schrägrillen verbindende Rillen verlaufen, welche gemeinsam mit den Schrägrillen in Draufsicht parallelogrammförmige mittlere Profilblöcke begrenzen,
wobei die mittleren Profilblöcke mit Einschnitten mit einer Breite von 0,4 mm bis 0,8 mm und mit seichter als die Einschnitte ausgeführten Mikrorillen mit einer Tiefe und einer Breite von 0,1 mm bis 0,8 mm versehen sind, wobei sich die Einschnitte und die Mikrorillen in jedem Profilblock zueinander parallel erstrecken.

Ein derartiger Fahrzeugluftreifen ist beispielsweise aus der DE 10 2017 211 128 A1 bekannt. Der Laufstreifen dieses Reifens weist Schrägrillen mit ineinander einmündenden laufstreifeninnenseitigen Rillenabschnitten auf, die mittlere Profilblöcke begrenzen. Diese Rillenabschnitte verlaufen unter in Wesentlichen gleich großen Winkeln von 30° bis 60° zur Umfangsrichtung und zueinander daher unter Winkeln von 60° bis 120°. In jedem mittleren Profilblock sind zwischen zwei Einschnitten zumindest zwei Mikrorillen und zwischen den sonstigen Einschnitten ist jeweils zumindest eine Mikrorille ausgebildet, wobei an den Blockrandbereichen jeweils eine einzige Mikrorille verläuft. Die Mikrorillen und Einschnitte verlaufen dabei zur axialen Richtung unter einem Winkel von bis zu 35°.

Die durch Mikrorillen gebildeten oberflächlichen Strukturen am Laufstreifen tragen bei neuem Reifen dazu bei, die Griffeigenschaften auf mit schnee- und/oder eisbedeckten Fahrbahnen zu verbessern, wobei sich der beim Bremsen und beim Beschleunigen auf schnee- und/oder eisbedeckten Fahrbahnen bildende Wasserfilm von der Oberfläche der Profilblöcke über die Mikrorillen schnell ableiten lässt. Die Mikrorillen stellen ferner Griffkanten zur Verfügung, welche die Griff-, Traktions- und Bremseigenschaften des Fahrzeugluftreifens unter winterlichen Fahrbedingungen verbessern.

Bei dem bekannten Fahrzeugluftreifen mit V-förmig verlaufenden Schrägrillen in einem laufrichtungsgebunden profilierten Laufstreifen ist die Ausgestaltung der Einschnitte und Mikrorillen im Hinblick auf deren Wirkungsweise verbesserungswürdig. Insbesondere weisen die mittleren Profilblöcke durch die gewählte Winkelung der Einschnitte und Mikrorillen sehr kleinvolumige randseitige Blocksegmente im Bereich der in Umfangsrichtung liegenden "Blockspitzen" auf, welche beim Abrollen leicht deformiert und dadurch verbogen werden. Durch dieses "Kippen" der randseitigen Blocksegmente ist die Kraftübertragung auf den Untergrund nicht optimal.

Der Erfindung liegt daher die Aufgabe zugrunde, bei einem Fahrzeugluftreifen der eingangs genannten Art die Anordnung der Schrägrillen sowie der Einschnitte und Mikrorillen in den mittleren Profilblöcken im Hinblick auf die Kraftübertragung weiter zu verbessern, wobei insbesondere die Traktions- und Bremseigenschaften auf eisigen und/oder verschneiten Fahrbahnen weiter verbessert werden sollen.

Gelöst wird die gestellte Aufgabe erfindungsgemäß dadurch,
dass die V-förmig zueinander verlaufenden, jeweils ineinander einmündenden Schrägrillen in Umfangsrichtung zueinander versetzt sind und ihre die mittleren Profilblöcke begrenzenden, laufstreifeninnenseitigen Rillenabschnitte - bezogen auf die Mittellinien der Schrägrillen - miteinander einen Winkel von 90° bis 110° einschließen, wobei sich die Einschnitte und Mikrorillen in den mittleren Profilblöcken - bezogen auf ihre Mittelinien - parallel zu den laufstreifeninnenseitigen Rillenabschnitten der Schrägrillen erstrecken.

Ein erfindungsgemäßer Reifen weist somit einen Laufstreifen mit mittleren Profilblöcken auf, deren Einschnitte und Mikrorillen eine auf den Verlauf der Schrägrillen des Laufstreifens abgestimmte und besonders vorteilhafte Orientierung aufweisen. Die mittleren Profilblöcke weisen daher - im Vergleich zu den mittleren Profilblöcken des aus der DE 10 2017 211 128 A1 bekannten Laufstreifens - eine größere und homogenere Umfangssteifigkeit auf, insbesondere werden randseitige, kleinvolumige und damit "weiche" Blocksegmente vermieden, wodurch das Biegeverhalten der Profilblöcke im Hinblick auf die Kraftübertragung auf den Untergrund deutlich verbessert ist. Die randseitigen Blocksegmente neigen nicht oder kaum mehr zum Kippen, sodass fortlaufend die komplette bzw. zumindest im Wesentlichen komplette Außenfläche der Profilblöcke mit dem Untergrund in Kontakt steht, wodurch die Kraftübertragung vom Reifen auf den Untergrund deutlich verbessert ist. Die parallel zu den Schrägrillen verlaufenden Einschnitte und Mikrorillen sorgen für eine besonders effektive Ableitung des sich unter Traktions- und Bremsbelastung auf schnee- und/oder eisbedeckten Fahrbahnen bildenden Wasserfilms, wodurch die Traktions- und Bremseigenschaften auf eisigen und oder verschneiten Fahrbahnen weiter verbessert sind.

Eine bevorzugte Ausführungsvariante ist dadurch gekennzeichnet, dass die verbindenden Rillen mit den laufstreifeninnenseitigen Rillenabschnitten der Schrägrillen - bezogen auf die Mittelinien - Scheitelwinkel einschließen, welche 90° ± 15°, insbesondere 90° ± 10°, betragen und dass die Einschnitte und die Mikrorillen - bezogen auf ihre Mittellinien - relativ zu den Mittellinien der verbindenden Rillen unter einem Winkel von 90° ± 5°, insbesondere von 90° ± 2°, verlaufen.

Gemäß einer weiteren bevorzugten Ausführungsvariante ist die Größe der Scheitelwinkel derart gewählt, dass die Mittellinie der jeweiligen verbindenden Rille stärker zur Umfangsrichtung geneigt ist als eine Gerade, welche die Mittellinie der verbindenden Rille schneidet und senkrecht zu den Mittellinien der Schrägrillen verläuft, wobei sich der eine Scheitelwinkel von dem anderen Scheitelwinkel um mindestens 5°, vorzugsweise um mindestens 7°, unterscheidet.

Die mittleren Profilblöcke weisen eine für die Kraftübertragung vorteilhaft hohe Steifigkeit auf, wenn die Einschnitte innerhalb der mittleren Profilblöcke enden. Durch diese Maßnahme ist das Biegeverhalten der Profilblöcke auf eine für die Traktions- und Bremseigenschaften weiter verbessert.

In diesem Zusammenhang ist es ferner von Vorteil, wenn die Einschnitte - ermittelt in Fortsetzung ihrer Mittellinien - einen Abstand von 0,5 mm bis 5,0 mm zu der den Profilblock begrenzenden, verbindenden Rille aufweisen. Solche Einschnitte reichen daher nah an die Blockkanten heran, sind somit entsprechend lang und weisen daher auch entsprechend lange und für die Griffeigenschaften vorteilhafte Einschnittkanten auf.

Bei neuem Reifen lässt sich etwaiges Schmelzwasser von den Außenflächen der Profilblöcke besonders wirkungsvoll ableiten, wenn die Mikrorillen die mittleren Profilblöcke durchqueren.

Gemäß einer weiteren vorteilhaften Ausführungsvariante, weisen die verbindenden Rillen in radialer Richtung eine Tiefe von 30% bis 100% der Profiltiefe und an der Laufstreifenperipherie eine Breite von 3,0 mm bis 10,0 mm auf.

Bei einem Fahrzeugluftreifen, bei dem der laufrichtungsgebundene profilierte Laufstreifen mit zu schulterseitigen Blockreihen gehörenden schulterseitigen Profilblöcken versehen ist, welche durch die V-förmig zueinander verlaufenden Schrägrillen und die verbindenden Rillen mitbegrenzt sind und welche mit - bezogen auf ihre Mittelinien - parallel zueinander verlaufenden Einschnitten und Mikrorillen versehen sind, wobei die Mikrorillen in Schrägrillen oder verbindende Rillen einmünden, ist es von Vorteil, wenn die Einschnitte in den schulterseitigen Profilblöcken im Bereich innerhalb der Bodenaufstandsfläche innerhalb der schulterseitigen Profilblöcke enden. Wie bereits für die mittleren Profilblöcke erläutert, lässt sich dadurch in analoger Weise das Biegeverhalten der schulterseitigen Profilblöcke auf eine für die Traktions- und Bremseigenschaften vorteilhaften Weise weiter verbessern.

Die Traktions- und Bremseigenschaften auf eisiger und/oder verschneiter Fahrbahn sind außerdem weiter verbessert, wenn die Einschnitte und die Mikrorillen zumindest abschnittsweise, insbesondere zumindest über den Großteil ihrer Erstreckung, wellen- oder zick-zack-förmig verlaufen.

Sehr ausgewogene Entwässerungs- sowie Traktions- und Bremseigenschaften lässt sich durch Abstimmen der Mikrorillenanzahl auf die Einschnittanzahl erreichen.

Eine solche Abstimmung ist beispielsweise dadurch gekennzeichnet, dass mittlere und/oder schulterseitige Profilblöcke vorgesehen sind, bei welchen die Einschnitte und die Mikrorillen abwechselnd ausgebildet sind. Ferner ist es in diesem Zusammenhang von Vorteil, wenn mittlere und/oder schulterseitige Profilblöcke vorgesehen sind, bei welchen zwischen unmittelbar benachbarten Einschnitten zwei Mikrorillen ausgebildet sind. Außerdem ist es günstig, wenn mittlere und/oder schulterseitige Profilblöcke vorgesehen sind, bei welchen im Bereich zwischen zumindest einem randseitigen Einschnitt und den Schrägrillen eine einzige Mikrorille ausgebildet ist.

Für die Wasserableiteigenschaften des Laufstreifenprofils ist es außerdem vorteilhaft, wenn die verbindenden Rillen in Draufsicht gerade verlaufen.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf eine Teilabwicklung eines Laufstreifens eines Fahrzeugluftreifens mit einer Ausführungsvariante der Erfindung und
Fig. 2 eine vergrößerte Draufsicht auf einen Ausschnitt des Laufstreifens aus Fig. 1.

Gemäß der Erfindung ausgeführte Fahrzeugluftreifens sind Reifen in Radialbauart, insbesondere für Personenkraftwagen, Vans oder Light-Trucks, wobei die Reifen zum Fahren unter winterlichen Fahrbedingungen besonders gut geeignet sind.

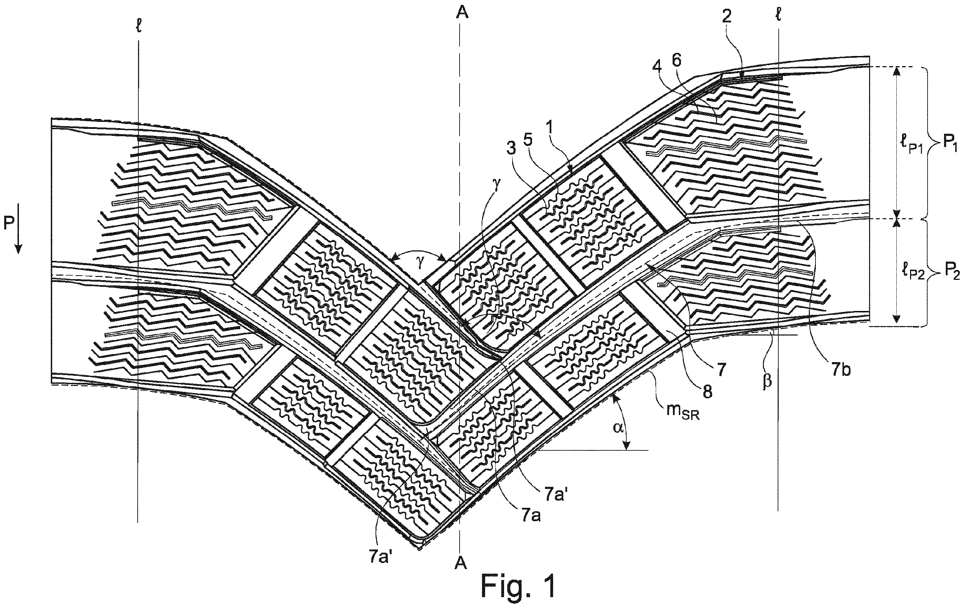

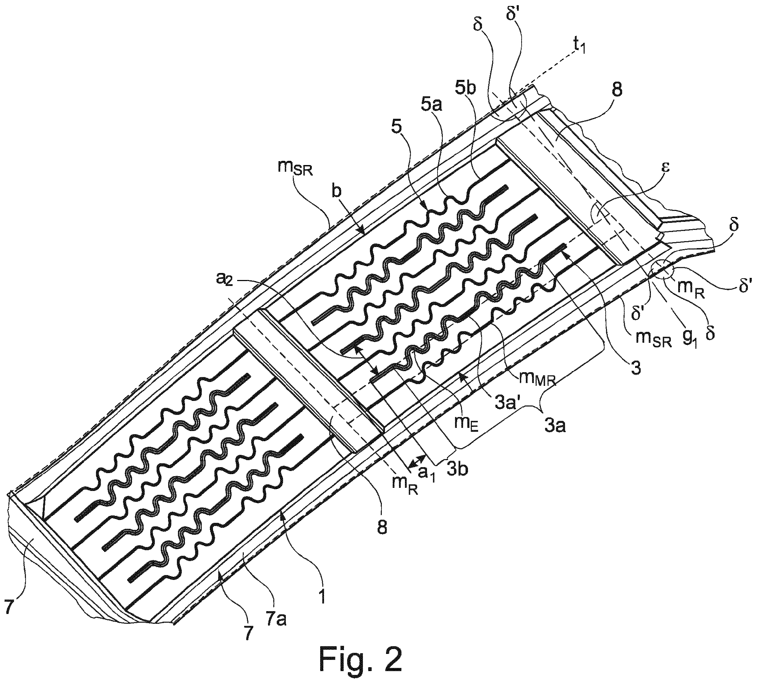

Wie Fig. 1 zeigt, weist der Laufstreifen mittlere Profilblöcke 1 und schulterseitige Profilblöcke 2 auf, welche auf spezielle Weise mit in Draufsicht parallel zueinander verlaufenden Einschnitten 3, 4 und Mikrorillen 5, 6 versehen sind, wobei unter parallel zueinander verlaufenden Einschnitten 3, 4 und Mikrorillen 5, 6 solche zu verstehen sind, welche sich unter Vernachlässigung der gekrümmten Außenkontur des Laufstreifens, bezogen auf ihre in Erstreckungsrichtung ausgerichteten Mittellinien m_{E}, m_{MR} (Fig. 2) in Draufsicht parallel zueinander erstrecken. Die Einschnitte 3, 4 weisen eine Breite von 0,4 mm bis 0,8 mm und in radialer Richtung eine vorzugsweise konstante Tiefe von 50% bis 100%, insbesondere von mindestens 65%, der jeweiligen Profiltiefe auf. Die Mikrorillen 5, 6 sind seichter ausgeführt als die Einschnitte 3, 4 und weisen eine Breite und eine Tiefe von jeweils 0,1 mm bis 0,8 mm, insbesondere von bis zu 0,5 mm, auf.

In Fig. 1 ist die Äquatorialebene des Reifens durch eine Linie A-A, die seitlichen Ränder der Bodenaufstandsfläche sind durch zwei Linien l angedeutet, wobei die Bodenaufstandsfläche dem statisch ermittelten Footprint entspricht (ermittelt mit einem auf einer Normfelge montierten Reifen, Last bei 70 % der maximalen Tragfähigkeit, Innendruck 85 % des Normdruckes, gemäß ETRTO-Standards).

Der Laufstreifen ist, wie üblich, gemäß einem Verfahren der Pitchlängenvariation geräuschoptimiert und setzt sich aus in Umfangsrichtung aufeinanderfolgenden Pitches (gleichartig gestaltete Profilabschnitte) zusammen, wobei exemplarisch ein Pitch P₁ mit einer Pitchlänge l_{P1} und ein Pitch P₂ mit einer Pitchlänge l_{P2} gezeigt sind.

Der Laufstreifen weist eine laufrichtungsgebunden ausgeführte Profilierung mit über die Laufstreifenbreite V- förmig zueinander verlaufenden und im Bereich der Äquatorialebene A-A ineinander einmündenden Schrägrillen 7 auf, welche die Hauptrillen des Laufstreifens bilden und daher die jeweils vorgesehene Profiltiefe von üblicherweise 6,5 mm bis 13,0 mm aufweisen. Die jeweils zum selben seitlichen Rand der Bodenaufstandsfläche verlaufenden Schrägrillen 7 verlaufen parallel zueinander. Jene Schrägrillen 7, welche zu dem einen seitlichen Rand der Bodenaufstandsfläche verlaufen, sind zu den Schrägrillen 7, welche zu dem anderen seitlichen Rand der Bodenaufstandsfläche verlaufen, in Umfangsrichtung, insbesondere um die Hälfte einer mittleren Pitchlänge, versetzt. Die Abrollrichtung des Reifens bei Vorwärtsfahrt ist durch einen Pfeil P angedeutet und ist derart, dass die Schrägrillen 1 bei Vorwärtsfahrt zuerst mit ihren laufstreifeninnenseitigen Enden in die Bodenaufstandsfläche eintreten.

Jede Schrägrille 7 weist beim gezeigten Ausführungsbeispiel einen in Draufsicht leicht gebogen verlaufenden laufstreifeninnenseitigen Rillenabschnitt 7a und einen zum Laufstreifenrand verlaufenden, zur Umfangsrichtung stärker geneigten schulterseitigen Rillenabschnitt 7b auf. Der innere Rillenabschnitt 7a begrenzt die jeweiligen mittleren Profilblöcke 1, nimmt mindestens 60%, insbesondere mindestens 75%, der innerhalb der Bodenaufstandsfläche entlang der Mittellinie m_{SR} ermittelten Erstreckungslänge der jeweiligen Schrägrille 7 ein und erstreckt sich bezogen auf die Mittellinie m_{SR} zur axialen Richtung unter einem Winkel α von 30° bis 55°, insbesondere von bis zu 50°, wobei der Winkel α aufgrund des erwähnten gebogenen Verlaufs des Rillenabschnittes 7a in Richtung zu den Laufstreifenrändern kontinuierlich abnimmt. Ferner weist der Rillenabschnitt 7a beim gezeigten Ausführungsbeispiel einen in Draufsicht leicht gebogen oder einseitig gerundeten Einmündungsabschnitt 7a' auf, über welchen der Anschluss an die jeweilige gegensinnig geneigte Schrägrille 7 erfolgt. Der schulterseitige Rillenabschnitt 7b erstreckt sich bezogen auf die Mittellinie m_{SR} zur axialen Richtung unter einem Winkel β von 0° bis 10°.

Die Rillenabschnitte 7a der Schrägrillen 7 verlaufen zueinander - bezogen auf die Mittellinien m_{SR} - unter einem Winkel γ, welcher 90° bis 110° beträgt. Der Winkel γ ist im Bereich der gegenseitigen Einmündungsstellen zwischen den durch den Schnittpunkt der jeweiligen Mittellinien m_{SR} verlaufenden, an die Mittellinien m_{SR} angelegten Tangenten ermittelt, wobei etwaige Einmündungsabschnitte 7a' unberücksichtigt bleiben.

In jeder Laufstreifenhälfte sind zwischen in Umfangsrichtung benachbarten Schrägrillen 7 zwei in die jeweiligen laufstreifeninnenseitigen Rillenabschnitte 7a einmündende, in Draufsicht gerade verlaufende Rillen 8 ausgebildet, welche bezogen auf die Umfangsrichtung gegensinnig zu den Rillenabschnitten 7a geneigt sind. Die Rillen 8 weisen in radialer Richtung eine Tiefe von 30% bis 100% der Profiltiefe und an der Laufstreifenperipherie eine Breite von 3,0 mm bis 10,0 mm auf, wobei beim gezeigten Ausführungsbeispiel in jeder Laufstreifenhälfte die weiter laufstreifenaußenseitig befindlichen Rillen 8 breiter ausgeführt sind als die näher zur Äquatorialebene (Linie A-A) befindlichen Rillen 8.

Bedingt durch die Schrägrillen 7 und die Rillen 8 ist jedes Pitch P₁, P₂ von einem in Draufsicht im Wesentlichen V-förmigen Profilabschnitt gebildet, welcher sich im Wesentlichen aus je einer der Schrägrillen 7 aus jeder der beiden Laufstreifenhälften und einer an diese in Umfangsrichtung anschließenden Profilpositivstruktur, welche jeweils aus vier mittleren Profilblöcken 1 und zwei schulterseitigen Profilblöcken 2 gebildet ist, zusammensetzt. Aufgrund der relativen Orientierung der Rillen 8 zu den Schrägrillen 7, welche noch genauer erläutert wird, weisen die mittleren Profilblöcke 1 in Draufsicht eine parallelogrammförmige, insbesondere rechteckartige, Gestalt auf. Die mittleren Profilblöcke 1 sind infolge des Verlaufes der Schrägrillen 7 in Umfangsrichtung auf "Spitzen" stehend angeordnet, wobei diese "Spitzen", wie in Fig. 1 gezeigt, auf Grund der bereits erwähnten Einmündungsabschnitte 7a' auch abgerundete Eckbereiche sein können.

Fig. 2 zeigt eine vergrößerte Draufsicht im Bereich von zwei zum Pitch P₂ gehörenden mittleren Profilblöcken 1. Im Bereich der die zwei mittleren Profilblöcke 1 begrenzenden laufstreifeninnenseitigen Rillenabschnitte 7a sind die zugehörigen Mittellinien m_{SR} der Schrägrillen 7 gestrichelt eingezeichnet. Ferner sind bei den verbindenden Rillen 8 die zugehörigen in Erstreckungsrichtung ausgerichteten Mittellinien m_{R} gestrichelt eingezeichnet.

Die Rillen 8 verlaufen derart, dass ihre Mittlinien m_{R} mit den Mittellinien m_{SR} der Schrägrillen 7 Scheitelwinkel δ und Scheitelwinkel δ' einschließen. In bekannter Weise sind die Scheitelwinkel δ und die Scheitelwinkel δ' jeweils einander gegenüberliegende Winkel, sodass die beiden Scheitelwinkel δ und die beiden Scheitelwinkel δ' jeweils gleichgroß sind. Die Scheitelwinkel δ, δ' betragen 90° ± 15°, insbesondere 90° ± 10°. Da die Mittellinien m_{SR} der Schrägrillen 7 beim gezeigten Ausführungsbeispiel aufgrund des erwähnten gebogenen Verlaufs des Rillenabschnittes 7a ebenfalls entsprechend gebogen verlaufen, sind die Scheitelwinkel δ, δ' zwischen der Mittlinie m_{R} einer Rille 8 und einer Tangente t₁, welche an die Mittellinie m_{SR} der jeweiligen Schrägrille 7 angelegt ist und durch den Schnittpunkt zwischen den Mittellinien m_{SR} und m_{R} verläuft, ermittelt. In Fig. 2 ist exemplarisch eine Tangente t₁ eingezeichnet, wobei aufgrund der starken Vergrößerung die Tangente t₁ und die entsprechende Mittellinie m_{SR} sehr nahe beieinander liegen. Bei der gezeigten Ausführungsvariante sind die Scheitelwinkel δ größer als die Scheitelwinkel δ', wobei die Scheitelwinkel δ, δ' derart gewählt bzw. ausgeführt sind, dass die Mittellinie m_{R} jeder Rille 8 stärker zur Umfangsrichtung geneigt ist als eine Gerade g₁, welche die Mittellinie m_{R} zwischen in Umfangsrichtung unmittelbar benachbarten laufstreifeninnenseitigen Rillenabschnitten 7a schneidet und senkreckt zu der bzw. zu den Tangente(n) t₁, an welcher bzw. welchen die Scheitelwinkel δ, δ' ermittelt sind, verläuft. Insbesondere unterscheiden sich die Scheitelwinkel δ von den Scheitelwinkel δ' um mindestens 5°, vorzugsweise um mindestens 7°, beim gezeigten Ausführungsbeispiel um zirka 10°.

Jeder mittlere Profilblock 1 ist mit einer Anzahl der bereits erwähnten Einschnitte 3 und mit einer Anzahl der ebenfalls bereits erwähnten Mikrorillen 5 versehen. Bei einem Einschnitt 3 ist die zugehörige Mittellinie m_{E}, bei einer Mikrorille 5 ist die zugehörige Mittellinie m_{MR} gestrichelt eingezeichnet, wobei die Mittellinien m_{E} und m_{MR} in Erstreckungsrichtung des Einschnitts 3 bzw. der Mikrorille 5 ausgerichtet sind. Wie eingangs bereits erwähnt, erstrecken sich die Einschnitte 3 und die Mikrorillen 5 - bezogen auf ihre Mittellinien m_{E}, m_{MR} - parallel zu den angrenzenden Schrägrillen 7, d.h. zu den jeweiligen laufstreifeninnenseitigen Rillenabschnitten 7a, sodass die Einschnitte 3 und die Mikrorillen 5 innerhalb eines Profilblockes 1 - ebenfalls bezüglich ihrer Mittellinien m_{E}, m_{MR} - parallel zueinander verlaufen. Ferner sind die Einschnitte 3 und die Mikrorillen 5 innerhalb eines Profilblockes 1 alternierend ausgebildet, sodass abwechselnd ein Einschnitt 3 auf eine Mikrorille 5 folgt, wobei an jeder Seite eines Einschnittes 3 eine einzige Mikrorille 5 ausgebildet ist. Beim gezeigten Ausführungsbeispiel sind in jedem zum Pitch P₁ gehörenden Profilblock 1 fünf und in jedem zum Pitch P₂ gehörenden Profilblock 1 drei Einschnitte 3 ausgebildet (Fig. 1).

Bedingt durch die erläuterte relative Orientierung der Rillen 8 zu den laufstreifeninnenseitigen Rillenabschnitten 7a (Fig. 2, Scheitelwinkel δ, δ') sowie die relative Orientierung der Einschnitte 3 und der Mikrorillen 5 zu den laufstreifeninnenseitigen Rillenabschnitten 7a, verlaufen die Einschnitte 3 und die Mikrorillen 5 - bezogen auf ihre Mittellinien m_{E} bzw. m_{MR} - relativ zu der bzw. den Mittellinie(n) m_{R} der Rille(n) 8 unter einem Winkel ε von 90° ± 5°, insbesondere von 90° ± 2°.

Die Einschnitte 3 sind über die senkrecht zu den laufstreifeninnenseitigen Rillenabschnitten 7a an der Laufstreifenperipherie ermittelte Blockbreite b des Profilblockes 1 zumindest weitgehend gleichmäßig über den Profilblock 1 verteilt und enden beidseitig innerhalb des Profilblockes 1 in entlang ihrer bzw. in Fortsetzung ihrer Mittellinien m_{E} ermittelten Abständen a₁ von 0,5 mm bis 5,0 mm vor den Rillen 8 bzw. den laufstreifeninnenseitigen Rillenabschnitten 7a. Zueinander unmittelbar benachbart verlaufende Einschnitte 3 weisen - ermittelte zwischen ihren Mittellinien m_{E} - übereinstimmende Abstände a₂ von vorzugsweise mindestens 3,0 mm auf.

Jeder Einschnitt 3 setzt sich in Draufsicht aus einem über den Großteil des Einschnittes 3 erstreckenden, zumindest abschnittsweise wellenförmig verlaufenden zentralen Abschnitt 3a und zwei in Draufsicht gerade verlaufenden Randabschnitten 3b zusammen, wobei der zentrale Abschnitt 3a einen in Draufsicht gerade verlaufenden mittleren Unterabschnitt 3a' umfasst. Wie eingangs erwähnt, ist die Tiefe der Einschnitte 3 vorzugsweise konstant, alternativ können die Randabschnitte 3b seichter ausgeführt sein als der zentrale Abschnitt 3a.

Die Mikrorillen 5 durchqueren die Profilblöcke 1 und münden daher in Rillen 8 bzw. in Schrägrillen 1 ein. Die Mikrorillen 5 weisen in Draufsicht einen mit dem Verlauf der Einschnitte 3 übereinstimmenden Verlauf auf und besitzen daher einen über den Großteil ihrer Erstreckung in Draufsicht wellenförmig verlaufenden zentralen Abschnitt 5a und zwei in Draufsicht gerade verlaufende Randabschnitte 5b.

Wie Fig. 1 zeigt, ist jeder schulterseitige Profilblock 2 mit einer Anzahl der bereits erwähnten Einschnitte 4 und mit einer Anzahl der ebenfalls bereits erwähnten Mikrorillen 6 versehen. Die Einschnitte 4 und die Mikrorillen 6 erstrecken sich in Draufsicht in axialer Richtung oder zu dieser unter einem Winkel von bis zu 20°, verlaufen über den seitlichen Rand der Bodenaufstandsfläche hinaus und sind innerhalb jedes Profilblockes 2 alternierend ausgebildet, wobei an jeder Seite eines Einschnittes 4 eine einzige Mikrorille 6 verläuft und die Einschnitte 4 in der Bodenaufstandsfläche innerhalb des zugehörigen Profilblockes 2 enden. Die Einschnitte 4 und die Mikrorillen 6 verlaufen in Draufsicht zick-zack-förmig, insbesondere sägezahnförmig.

Die Erfindung ist auf das beschriebene Ausführungsbeispiel nicht beschränkt.

Die Schrägrillen 7 können in Draufsicht auch gerade verlaufen, insbesondere gerade verlaufende laufstreifeninnenseitige Rillenabschnitte 7a aufweisen, wobei bei dieser Variante die erwähnten Winkel γ, welche die Schrägrillen 7 bzw. deren Rillenabschnitte 7a einschließen, unmittelbar zwischen den Mittellinien m_{SR} ermittelt sind. Sind gerade verlaufende Rillenabschnitte 7a vorgesehen, ist der Winkel γ weitgehend konstant. Ferner sind bei dieser Variante die Scheitelwinkel δ, δ' jeweils direkt zwischen den Mittellinien m_{R} der Rillen 8 und den Mittellinien m_{SR} der Schrägrillen 7 ermittelt.

Insbesondere können Mikrorillen und Einschnitte vorgesehen sein, welche in Draufsicht gerade oder zumindest abschnittsweise zick-zack-, wellenförmig oder dergleichen verlaufen. Zwischen zwei Einschnitten sowie zwischen einem randseitigen Einschnitt und der jeweiligen Schrägrille können auch mehrere, insbesondere zwei, Mikrorillen ausgebildet sein.

### Bezugsziffernliste

- 1: mittlerer Profilblock
- 2: schulterseitiger Profilblock
- 3: Einschnitt
- 3a: zentraler Abschnitt
- 3'a: Unterabschnitt
- 3b: Randabschnitt
- 4: Einschnitt
- 5: Mikrorille
- 5a: zentraler Abschnitt
- 5b: Randabschnitt
- 6: Mikrorille
- 7: Schrägrille
- 7a: Rillenabschnitt
- 7a': Einmündungsabschnitt
- 7b: Rillenabschnitt
- 8: Rille
- A-A: Linie (Äquatorialebene)
- a₁, a₂: Abstand
- b: Blockbreite
- l: Linie (seitlicher Rand der Bodenaufstandsfläche)
- l_{P1}, l_{P1}: Pitchlänge
- P₁, P₂: Pitch
- m_{R}, m_{SR}, m_{E}, m_{MR}: Mittellinie
- P: Pfeil (Abrollrichtung)
- t₁: Tangente
- α, β, γ, ε: Winkel
- δ, δ': Scheitelwinkel

## Patentansprüche

1. Fahrzeugluftreifen mit einem laufrichtungsgebunden profilierten Laufstreifen mit über die Laufstreifenbreite V-förmig zueinander verlaufenden, im Bereich der Laufstreifenmitte ineinander einmündenden Schrägrillen (7),
wobei in jeder Laufstreifenhälfte zwischen den in Umfangsrichtung aufeinanderfolgenden Schrägrillen (7) jeweils zumindest zwei die aufeinanderfolgenden Schrägrillen (7) verbindende Rillen (8) verlaufen, welche gemeinsam mit den Schrägrillen (7) in Draufsicht parallelogrammförmige mittlere Profilblöcke (1) begrenzen,
wobei die mittleren Profilblöcke (1) mit Einschnitten (3) mit einer Breite von 0,4 mm bis 0,8 mm und mit seichter als die Einschnitte (3) ausgeführten Mikrorillen (5) mit einer Tiefe und einer Breite von 0,1 mm bis 0,8 mm versehen sind, wobei sich die Einschnitte (3) und die Mikrorillen (5) in jedem Profilblock (1) zueinander parallel erstrecken,
**dadurch gekennzeichnet,**
**dass** die V-förmig zueinander verlaufenden, jeweils ineinander einmündenden Schrägrillen (7) in Umfangsrichtung zueinander versetzt sind und ihre die mittleren Profilblöcke (1) begrenzenden, laufstreifeninnenseitigen Rillenabschnitte (7a) - bezogen auf die Mittellinien (m_{SR}) der Schrägrillen (7) - miteinander einen Winkel (γ) von 90° bis 110° einschließen,
wobei sich die Einschnitte (3) und Mikrorillen (5) in den mittleren Profilblöcken (1) - bezogen auf ihre Mittelinien (m_{E}, m_{MR}) - parallel zu den laufstreifeninnenseitigen Rillenabschnitten (7a) der Schrägrillen (7) erstrecken.

2. Fahrzeugluftreifen nach Anspruch 1, **dadurch gekennzeichnet, dass** die verbindenden Rillen (8) mit den laufstreifeninnenseitigen Rillenabschnitten (7a) der Schrägrillen (7) - bezogen auf die Mittelinien (m_{R}, m_{SR}) - Scheitelwinkel (δ, δ') einschließen, welche 90° ± 15°, insbesondere 90° ± 10°, betragen und dass die Einschnitte (3) und die Mikrorillen (5) - bezogen auf ihre Mittellinien (m_{E}, m_{MR}) - relativ zu den Mittellinien (m_{R}) der verbindenden Rillen (8) unter einem Winkel (ε) von 90° ± 5°, insbesondere von 90° ± 2°, verlaufen.

3. Fahrzeugluftreifen nach Anspruch 2, **dadurch gekennzeichnet, dass** die Größe der Scheitelwinkel (δ, δ') derart gewählt ist, dass die Mittellinie (m_{R}) der jeweiligen verbindenden Rille (8) stärker zur Umfangsrichtung geneigt ist als eine Gerade (g₁), welche die Mittellinie (m_{R}) der verbindenden Rille (8) schneidet und senkrecht zu den Mittellinien (m_{SR}) der Schrägrillen (7) verläuft, wobei sich der eine Scheitelwinkel (δ) von dem anderen Scheitelwinkel (δ') um mindestens 5°, vorzugsweise um mindestens 7°, unterscheidet.

4. Fahrzeugluftreifen nach einem der Ansprüche 1 bis 3, **dadurch gekennzeichnet, dass** die Einschnitte (3) innerhalb der mittleren Profilblöcke (1) enden.

5. Fahrzeugluftreifen nach Anspruch 4, **dadurch gekennzeichnet, dass** die Einschnitte (3) - ermittelt in Fortsetzung ihrer Mittellinien (m_{E}) - einen Abstand (a₁) von 0,5 mm bis 5,0 mm zu der den Profilblock (1) begrenzenden, verbindenden Rille (8) aufweisen.

6. Fahrzeugluftreifen nach einem der Ansprüche 1 bis 5, **dadurch gekennzeichnet, dass** die Mikrorillen (5) die mittleren Profilblöcke (1) durchqueren.

7. Fahrzeugluftreifen nach einem der Ansprüche 1 bis 6, **dadurch gekennzeichnet, dass** die verbindenden Rillen (8) in radialer Richtung eine Tiefe von 30% bis 100% der Profiltiefe und an der Laufstreifenperipherie eine Breite von 3,0 mm bis 10,0 mm aufweisen.

8. Fahrzeugluftreifen nach einem der Ansprüche 1 bis 7, bei dem der laufrichtungsgebundene profilierte Laufstreifen mit zu schulterseitigen Blockreihen gehörenden schulterseitigen Profilblöcken (2), welche durch die V-förmig zueinander verlaufenden Schrägrillen (7) und die verbindenden Rillen (8) mitbegrenzt sind und welche mit - bezogen auf ihre Mittelinien - parallel zueinander verlaufenden Einschnitten (4) und Mikrorillen (6) versehen sind, wobei die Mikrorillen (6) in Schrägrillen (7) oder verbindende Rillen (8) einmünden, **dadurch gekennzeichnet,**
**dass** die Einschnitte (4) in den schulterseitigen Profilblöcken (2) im Bereich innerhalb der Bodenaufstandsfläche (Linie l) innerhalb der schulterseitigen Profilblöcke (2) enden.

9. Fahrzeugluftreifen nach einem der Ansprüche 1 bis 8, **dadurch gekennzeichnet, dass** die Einschnitte (3, 4) und die Mikrorillen (5, 6) zumindest abschnittsweise, insbesondere zumindest über den Großteil ihrer Erstreckung, wellen- oder zick-zack-förmig verlaufen.

10. Fahrzeugluftreifen nach einem der Ansprüche 1 bis 9, **dadurch gekennzeichnet, dass** mittlere und/oder schulterseitige Profilblöcke (1, 2) vorgesehen sind, bei welchen die Einschnitte (3, 4) und die Mikrorillen (5, 6) abwechselnd ausgebildet sind.

11. Fahrzeugluftreifen nach einem der Ansprüche 1 bis 10, **dadurch gekennzeichnet, dass** mittlere und/oder schulterseitige Profilblöcke (1, 2) vorgesehen sind, bei welchen zwischen unmittelbar benachbarten Einschnitten (3, 4) zwei Mikrorillen (5, 6) ausgebildet sind.

12. Fahrzeugluftreifen nach einem der Ansprüche 1 bis 11, **dadurch gekennzeichnet, dass** mittlere und/oder schulterseitige Profilblöcke (1, 2) vorgesehen sind, bei welchen im Bereich zwischen zumindest einem randseitigen Einschnitt (3, 4) und den Schrägrillen (7) eine einzige Mikrorille (5, 6) ausgebildet ist.

13. Fahrzeugluftreifen nach einem der Ansprüche 1 bis 12, **dadurch gekennzeichnet, dass** die verbindenden Rillen (8) in Draufsicht gerade verlaufen.

## Claims

1. Pneumatic vehicle tyre with a directional profiled tread with oblique channels (7) running in a V shape relative to one another over the width of the tread and merging into one another in the region of the middle of the tread,
wherein, in each half of the tread, between the oblique channels (7) following successively in the circumferential direction there respectively run at least two channels (8) which connect the successive oblique channels (7) and together with the oblique channels (7) delimit middle profile blocks (1) that are parallelogram-shaped in plan view,
wherein the middle profile blocks (1) are provided with sipes (3) with a width of 0.4 mm to 0.8 mm and with micro-channels (5) which are formed so as to be shallower than the sipes (3) and have a depth and a width of 0.1 mm to 0.8 mm, wherein the sipes (2) and the micro-channels (5) in each profile block (1) extend parallel to one another,
**characterized**
**in that** the oblique channels (7) which run in a V shape relative to one another and in each case merge into one another are offset relative to one another in the circumferential direction, and their channel portions (7a) on the inner side of the tread which delimit the middle profile blocks (1) include - with respect to the centrelines (m_{SR}) of the oblique channels (7) - an angle (γ) of 90° to 110° with one another,
wherein the sipes (3) and micro-channels (5) in the middle profile blocks (1) extend - with respect to their centrelines (m_{E}, m_{MR}) - parallel to the channel portions (7a) on the inner side of the tread of the oblique channels (7).

2. Pneumatic vehicle tyre according to Claim 1, **characterized in that** the connecting channels (8) include with the channel portions (7a) on the inner side of the tread of the oblique channels (7) - with respect to the centrelines (m_{R}, m_{SR}) - vertex angles (δ, δ') which are 90° ± 15°, in particular 90° ± 10°, and **in that** the sipes (3) and the micro-channels (5) run - with respect to their centrelines (m_{E}, m_{MR}) - relative to the centrelines (m_{R}) of the connecting channels (8) at an angle (ε) of 90° ± 5°, in particular of 90° ± 2°.

3. Pneumatic vehicle tyre according to Claim 2, **characterized in that** the size of the vertex angles (δ, δ') is chosen in such a way that the centreline (m_{R}) of the respective connecting channel (8) is inclined more in relation to the circumferential direction than a straight line (g₁) that intersects the centreline (m_{R}) of the connecting channel (8) and runs perpendicularly to the centrelines (m_{SR}) of the oblique channels (7), wherein the one vertex angle (δ) differs from the other vertex angle (δ') by at least 5°, preferably by at least 7°.

4. Pneumatic vehicle tyre according to one of Claims 1 to 3, **characterized in that** the sipes (3) end within the middle profile blocks (1).

5. Pneumatic vehicle tyre according to Claim 4, **characterized in that** the sipes (3) are at a distance (a₁) - determined as a continuation of their centrelines (m_{E}) - of 0.5 mm to 5.0 mm from the connecting channel (8) delimiting the profile block (1) .

6. Pneumatic vehicle tyre according to one of Claims 1 to 5, **characterized in that** the micro-channels (5) cross the middle profile blocks (1).

7. Pneumatic vehicle tyre according to one of Claims 1 to 6, **characterized in that** the connecting channels (8) have in the radial direction a depth of 30% to 100% of the profile depth and at the periphery of the tread a width of 3.0 mm to 10.0 mm.

8. Pneumatic vehicle tyre according to one of Claims 1 to 7, in which the directional profiled tread is provided with shoulder-side profile blocks (2), which belong to shoulder-side rows of blocks and are co-delimited by the oblique channels (7) running in a V shape relative to one another and the connecting channels (8) and are provided with sipes (4) and micro-channels (6) running parallel to one another - with respect to their centrelines -, wherein the micro-channels (6) merge into oblique channels (7) or connecting channels (8),
**characterized**
**in that** the sipes (4) in the shoulder-side profile blocks (2) in the region within the ground contact area (line l) end within the shoulder-side profile blocks (2).

9. Pneumatic vehicle tyre according to one of Claims 1 to 8, **characterized in that** the sipes (3, 4) and the micro-channels (5, 6) run at least partly, in particular at least over most of their extent, in a wave-shaped or zigzag-shaped form.

10. Pneumatic vehicle tyre according to one of Claims 1 to 9, **characterized in that** middle and/or shoulder-side profile blocks (1, 2) in which the sipes (3, 4) and the micro-channels (5, 6) are formed alternately are provided.

11. Pneumatic vehicle tyre according to one of Claims 1 to 10, **characterized in that** middle and/or shoulder-side profile blocks (1, 2) in which two micro-channels (5, 6) are formed between directly neighbouring sipes (3, 4) are provided.

12. Pneumatic vehicle tyre according to one of Claims 1 to 11, **characterized in that** middle and/or shoulder-side profile blocks (1, 2) in which a single microchannel (5, 6) is formed in the region between at least one edge-side sipe (3, 4) and the oblique channels (7) are provided.

13. Pneumatic vehicle tyre according to one of Claims 1 to 12, **characterized in that** the connecting channels (8) run straight in plan view.

## Revendications

1. Pneumatique de véhicule, comprenant une bande de roulement profilée tenant compte du sens de la marche, dotée de rainures obliques (7) s'étendant en forme de V les unes par rapport aux autres sur la largeur de bande de roulement et débouchant les unes sur les autres au niveau du centre de bande de roulement,
dans lequel, dans chaque moitié de bande de roulement, entre les rainures obliques (7) successives dans la direction circonférentielle s'étendent respectivement au moins deux rainures (8) reliant les rainures obliques successives et limitant conjointement avec les rainures obliques (7) des blocs de sculpture centraux (1) en forme de parallélogramme en vue de dessus,
les blocs de sculpture centraux (1) étant munis d'incisions (3) d'une largeur de 0,4 mm à 0,8 mm et de microrainures (5) réalisées de manière moins profonde que les incisions (3), d'une profondeur et d'une largeur de 0,1 mm à 0,8 mm, les incisions (3) et les microrainures (5) s'étendant en parallèle les unes aux autres dans chaque bloc de sculpture (1),
**caractérisé en ce que** les rainures obliques (7) s'étendant en forme de V les unes par rapport aux autres et débouchant respectivement les unes sur les autres sont décalées les unes par rapport aux autres dans la direction circonférentielle, et **en ce que** leurs sections de rainure côté intérieur de la bande de roulement (7a) délimitant les blocs de sculpture centraux (1) forment ensemble - par rapport aux lignes médianes (m_{SR}) des rainures obliques (7) - un angle (γ) de 90° à 110°,
les incisions (3) et les microrainures (5) s'étendant dans les blocs de sculpture centraux (1) - par rapport à leurs lignes médianes (m_{E}, m_{MR}) - en parallèle aux sections de rainure côté intérieur de la bande de roulement (7a) des rainures obliques (7).

2. Pneumatique de véhicule selon la revendication 1, **caractérisé en ce que** les rainures de liaison (8) forment avec les sections de rainure côté intérieur de la bande de roulement (7a) des rainures obliques (7) - par rapport aux lignes médianes (m_{R}, m_{SR}) - des angles au sommet (δ, δ') qui mesurent 90° ±15°, en particulier 90° +10°, et **en ce que** les incisions (3) et les microrainures (5) - par rapport à leurs lignes médianes (m_{E}, m_{MR}) - s'étendent par rapport aux lignes médianes (m_{R}) des rainures de liaison (8) selon un angle (ε) de 90° ±5°, en particulier de 90° ±2°.

3. Pneumatique de véhicule selon la revendication 2, **caractérisé en ce que** la grandeur des angles au sommet (δ, δ') est sélectionnée de telle sorte que la ligne médiane (m_{R}) de la rainure de liaison respective (8) est inclinée plus fortement vers la direction circonférentielle qu'une droite (g₁) qui coupe la ligne médiane (m_{R}) de la rainure de liaison (8) et s'étend perpendiculairement aux lignes médianes (m_{SR}) des rainures obliques (7), ledit un angle au sommet (δ) étant différent de l'autre angle au sommet (δ') d'au moins 5°, de préférence d'au moins 7°.

4. Pneumatique de véhicule selon l'une quelconque des revendications 1 à 3, **caractérisé en ce que** les incisions (3) se terminent à l'intérieur des blocs de sculpture centraux (1).

5. Pneumatique de véhicule selon la revendication 4, **caractérisé en ce que** les incisions (3) présentent une distance (a₁) - déterminée dans le prolongement de leurs lignes médianes (m_{E}) - de 0,5 mm à 5,0 mm par rapport à la rainure de liaison (8) délimitant le bloc de sculpture (1) .

6. Pneumatique de véhicule selon l'une quelconque des revendications 1 à 5, **caractérisé en ce que** les microrainures (5) traversent les blocs de sculpture centraux (1).

7. Pneumatique de véhicule selon l'une quelconque des revendications 1 à 6, **caractérisé en ce que** les rainures de liaison (8) présentent dans la direction radiale une profondeur de 30 % à 100 % de la profondeur de sculpture et présentent sur la périphérie de bande de roulement une largeur de 3,0 mm à 10,0 mm.

8. Pneumatique de véhicule selon l'une quelconque des revendications 1 à 7, dans lequel la bande de roulement profilée tenant compte du sens de la marche est dotée de blocs de sculpture côté épaule (2) appartenant à des rangées de blocs côté épaule, qui sont également délimités par les rainures obliques (7) s'étendant en forme de V les unes par rapport aux autres et les rainures de liaison (8) et qui sont munis - par rapport à leurs lignes médianes - d'incisions (4) s'étendant en parallèle les unes aux autres et de microrainures (6), les microrainures (6) débouchant sur des rainures obliques (7) ou des rainures de liaison (8),
**caractérisé en ce que** les incisions (4) dans les blocs de sculpture côté épaule (2) se terminent dans la zone à l'intérieur de la surface de contact avec le sol (ligne 1) à l'intérieur des blocs de sculpture côté épaule (2).

9. Pneumatique de véhicule selon l'une quelconque des revendications 1 à 8, **caractérisé en ce que** les incisions (3, 4) et les microrainures (5, 6) s'étendent au moins par endroits, en particulier au moins sur une majeure partie de leur étendue, de manière ondulée ou en zigzag.

10. Pneumatique de véhicule selon l'une quelconque des revendications 1 à 9, **caractérisé en ce que** des blocs de sculpture (1, 2) centraux et/ou côté épaule sont prévus sur lesquels les incisions (3, 4) et les microrainures (5, 6) sont réalisées en alternance.

11. Pneumatique de véhicule selon l'une quelconque des revendications 1 à 10, **caractérisé en ce que** des blocs de sculpture (1, 2) centraux et/ou côté épaule sont prévus sur lesquels deux microrainures (5, 6) sont réalisées entre des incisions (3, 4) directement voisines.

12. Pneumatique de véhicule selon l'une quelconque des revendications 1 à 11, **caractérisé en ce que** des blocs de sculpture (1, 2) centraux et/ou côté épaule sont prévus sur lesquels une seule microrainure (5, 6) est réalisée dans la zone entre au moins une incision côté bord (3, 4) et les rainures obliques (7).

13. Pneumatique de véhicule selon l'une quelconque des revendications 1 à 12, **caractérisé en ce que** les rainures de liaison (8) sont rectilignes en vue de dessus.
